# EUROPEAN PATENT APPLICATION

(11) **EP 4 507 411 A1**
(43) Date of publication of application: **12.02.2025**
(21) Application number: 23190479.8
(22) Date of filing: 09.08.2023
(51) Int. Cl.: H04W 64/00, H04W 76/14

(54) **METHOD AND APPARATUS FOR PROCESSING DATA ASSOCIATED WITH A SIDELINK-BASED POSITIONING PROCEDURE**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

A method, for example a computer-implemented method, for processing data associated with a sidelink-based positioning procedure (POS-PROC-SL), the method comprising: receiving (100) first information (I-1) characterizing at least one requirement associated with the sidelink-based positioning procedure (POS-PROC-SL), determining (102), based on the first information (I-1), second information (I-2) characterizing at least one parameter for the sidelink-based positioning procedure (POS-PROC-SL), and, optionally, using (104) the second information (I-2) for performing the sidelink-based positioning procedure (POS-PROC-SL).

## Description

### Technical Field

The disclosure relates to a method of processing data associated with a sidelink-based positioning procedure.

The disclosure further relates to an apparatus for processing data associated with a sidelink-based positioning procedure.

### Summary

Exemplary embodiments relate to a method, for example a computer-implemented method, for processing data associated with a sidelink-based positioning procedure, the method comprising: receiving first information characterizing at least one requirement associated with the sidelink-based positioning procedure, determining, based on the first information, second information characterizing at least one parameter for the sidelink-based positioning procedure, and, optionally, using the second information for performing the sidelink-based positioning procedure. In some embodiments, the second information can e.g. be used to change characteristics of the sidelink-based positioning procedure.

In some embodiments, the first information may e.g. be associated with an application, and/or the first information may e.g. be transmitted by and/or received from the application.

In some exemplary embodiments, the method can e.g. be used with a wireless, for example cellular, communications system, which is for example based on and/or adheres at least partially to at least one third generation partnership project, 3GPP, radio standard such as 4G (fourth generation), 5G (fifth generation), 6G (sixth generation) or other radio access technology.

In some embodiments one or more terminal devices may be used for the sidelink-based positioning procedure.

In some embodiments, the sidelink-based positioning procedure may e.g. use and/or may be based on a sidelink positioning protocol according to some, for example accepted (or planned), standard, such as, e.g., a Sidelink Positioning Protocol of 3GPP, see, for example, 3GPP TS 38.355.

In some embodiments, the sidelink positioning protocol according to some accepted (or planned) standard, such as, e.g., the Sidelink Positioning Protocol of 3GPP, see, for example, 3GPP TS 38.355, may be enhanced based on the principle according to the embodiments.

In some embodiments, for the sidelink-based positioning procedure, the terminal devices may exchange positioning reference signals (PRS) over a sidelink (SL) interface, e.g., SL-PRS, e.g., to facilitate positioning, e.g. determining a position of at least one of the terminal devices, e.g. a target terminal device.

In some embodiments, the one or more terminal devices may e.g. be a user equipment (UE) or a data transceiver modem, which, for example, may be associated with a mobile object such as e.g. a vehicle, for example car or truck or the like.

In some exemplary embodiments, the one or more terminal devices may be at least one of (or may e.g. be associated with at least one of): an loT (Internet of Things) device, an infrastructure component or part of an infrastructure component (e.g., traffic lights, street lights, traffic sign, toll gate), an industrial automation component, e.g. IIoT (Industrial loT) component or infrastructure (e.g., robots, machines, etc.), a device for a mobile broadband user, and/or a vehicle.

In some embodiments, using the second information for performing the sidelink-based positioning procedure comprises at least one of: a) instructing at least one terminal device to use the second information for the sidelink-based positioning procedure, for example instructing the at least one terminal device to perform measurements for the sidelink-based positioning procedure based on the at least one parameter, and/or b) using the second information for the sidelink-based positioning procedure (e.g., if the method according to the embodiments is performed by a terminal device).

In some embodiments, determining the second information comprises at least one of: a) performing a search (e.g., a parameter search) for determining a parameter value for the at least one parameter that enables to meet the at least one requirement, b) using a look-up table.

In some embodiments, the method comprises: determining, e.g., assigning, a priority based on the second information, e.g. based on a latency requirement, e.g. an end-to-end latency requirement, and, optionally, using the priority for the sidelink-based positioning procedure.

In some embodiments, the method comprises: receiving third information from at least one terminal device, the third information characterizing one or more measurements associated with the sidelink-based positioning procedure, and, optionally, determining fourth information characterizing a position of the at least one terminal device, and, optionally, providing, e.g., transmitting, the fourth information to at least one further entity.

In some embodiments, the method comprises at least one of: a) determining whether the at least one parameter enables to meet the at least one requirement, and/or b) adapting the at least one parameter, and/or c) using the adapted at least one parameter for performing the sidelink-based positioning procedure, and/or d) repeating, e.g. iteratively repeating, at least one of the determining and/or the adapting and/or the using.

In some embodiments, the at least one requirement comprises at least one of the following elements: a) an end-to-end requirement, for example measured from a request to an obtaining of a result associated with the request, for example an end-to-end latency, b) a requirement associated with a predetermined, for example finer, granularity, for example related to at least one specific step of a process, for example b1) a measurement duration, and/or b2) a latency between an end of a measurement and a provision of the position, c) a positioning requirement, for example an accuracy and/or a precision, d) a positioning report requirement, for example an update rate.

In some embodiments, receiving the first information comprises receiving the first information within a positioning request.

In some embodiments, the at least one parameter comprises at least one of: a) a bandwidth associated with positioning reference signals for the sidelink-based positioning procedure, b) a periodicity of positioning reference signals for the sidelink-based positioning procedure, c) a comb structure associated with the sidelink-based positioning procedure.

Some embodiments relate to an apparatus, for example for a mobile communication system, for performing the method according to the embodiments.

Some embodiments relate to a network device, for example for a mobile communication system, comprising the apparatus according to the embodiments.

Some embodiments relate to a a terminal device, for example for a mobile communication system, comprising the apparatus according to the embodiments.

Some embodiments relate to a communication system, for example a wireless, for example cellular, communication system, comprising at least one of: a) an apparatus according to the embodiments, and/or b) a network device according to the embodiments, and/or c) a terminal device according to the embodiments.

Some embodiments relate to a computer program comprising instructions which, when the program is executed by a computer, cause the computer to carry out the method according to the embodiments.

Some embodiments relate to a computer-readable storage medium comprising instructions which, when executed by a computer, cause the computer to carry out the method according to the embodiments.

Some embodiments relate to a data carrier signal carrying and/or characterizing the computer program according to the embodiments.

Some embodiments relate to a use of the method according to the embodiments and/or of the apparatus according to the embodiments and/or of the network device according to the embodiments and/or of the terminal device according to the embodiments and/or of the communication system according to the embodiments and/or of the computer program according to the embodiments, and/or of the computer-readable storage medium according to the embodiments and/or of the data carrier signal according to the embodiments, for at least one of: a) determining the at least one parameter for the sidelink-based positioning procedure, b) setting the at least one parameter for the sidelink-based positioning procedure, c) taking into consideration requirements, for example of at least one application, for the sidelink-based positioning procedure, d) translating requirements of at least one application related to the sidelink-based positioning procedure to the at least one parameter for the sidelink-based positioning procedure, e) combining, for example combined transmission, of a positioning request with the first information, f) providing different parameter for the sidelink-based positioning procedure per application.

### Brief Description of Exemplary Figures

Some exemplary embodiments will now be described with reference to the accompanying drawings, in which:
- Fig. 1: schematically depicts a simplified flow-chart according to some embodiments,
- Fig. 2: schematically depicts a simplified block diagram according to some embodiments,
- Fig. 3: schematically depicts a simplified flow-chart according to some embodiments,
- Fig. 4: schematically depicts a simplified flow-chart according to some embodiments,
- Fig. 5: schematically depicts a simplified flow-chart according to some embodiments,
- Fig. 6: schematically depicts a simplified flow-chart according to some embodiments,
- Fig. 7: schematically depicts a simplified block diagram according to some embodiments,
- Fig. 8: schematically depicts a simplified signaling diagram according to some embodiments,
- Fig. 9: schematically depicts aspects of use according to some embodiments.

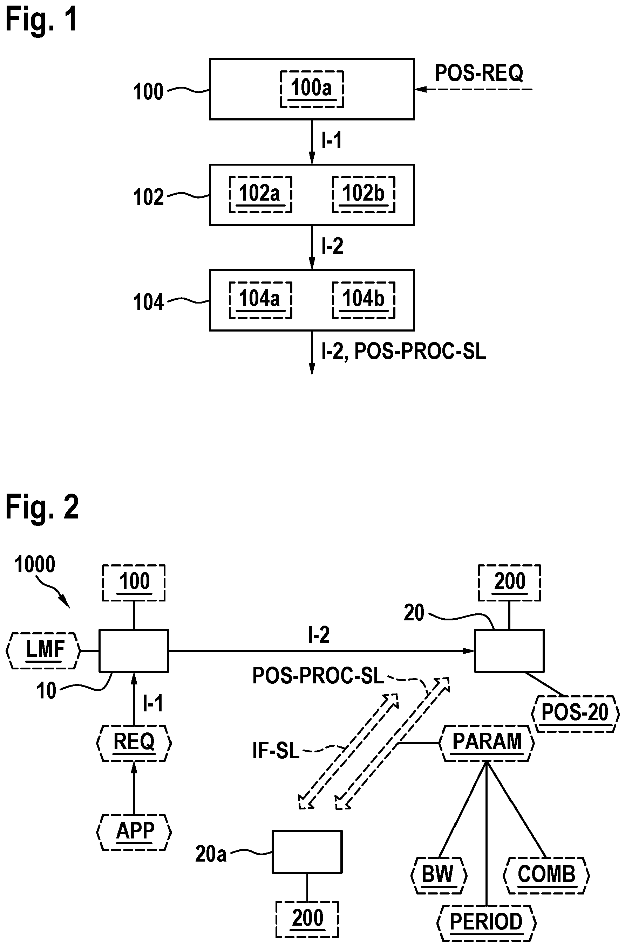

Exemplary embodiments, see Fig. 1, 2, relate to a method, for example a computer-implemented method, for processing data associated with a sidelink-based positioning procedure POS-PROC-SL (Fig. 2), the method comprising: receiving 100 (Fig. 1) first information I-1 characterizing at least one requirement REQ associated with the sidelink-based positioning procedure POS-PROC-SL, determining 102, based on the first information 1-1, second information I-2 characterizing at least one parameter PARAM for the sidelink-based positioning procedure POS-PROC-SL, and, optionally, using 104 the second information I-2 for performing the sidelink-based positioning procedure POS-PROC-SL. In some embodiments, the second information I-2 can e.g. be used to change characteristics of the sidelink-based positioning procedure POS-PROC-SL. In some embodiments, this enables to adapt the sidelink-based positioning procedure POS-PROC-SL to the at least one requirement REQ.

In some embodiments, Fig. 2, the first information I-1 may e.g. be associated with an application APP. In some embodiments, the first information I-1 may e.g. be transmitted by the application APP, e.g. to a device 10, e.g., a network device, wherein the device 10 is for example configured to perform at least some aspects according to the embodiments. In some embodiments, the device 10 may e.g. perform aspects of a location management function LMF. In some embodiments, the device 10 may receive the first information I-1 from the application APP. This way, in some embodiments, the application can notify the device 10 about its requirements with respect to the sidelink-based positioning procedure POS-PROC-SL, and the at least one parameter PARAM for the sidelink-based positioning procedure POS-PROC-SL may e.g. be adapted based on the first information 1-1.

In some exemplary embodiments, Fig. 2, the method can e.g. be used with a wireless, for example cellular, communications system 1000, which is for example based on and/or adheres at least partially to at least one third generation partnership project, 3GPP, radio standard such as 4G (fourth generation), 5G (fifth generation), 6G (sixth generation) or other radio access technology.

In some embodiments one or more terminal devices 20, 20a may be used for the sidelink-based positioning procedure POS-PROC-SL.

In some embodiments, for the sidelink-based positioning procedure POS-PROC-SL, the terminal devices 20, 20a may exchange positioning reference signals, PRS, over a sidelink interface IF-SL to facilitate positioning, e.g. determining a position of at least one of the terminal devices 20, 20a. In some embodiments, the second information I-2 may be used to influence, e.g., control, at least some aspects of the sidelink-based positioning procedure POS-PROC-SL, e.g. how the positioning reference signals, PRS, are exchanged. In some embodiments, the positioning reference signals, PRS used for the sidelink-based positioning procedure POS-PROC-SL may also be termed "sidelink PRS", e.g., SL-PRS.

In some embodiments, Fig. 2, the one or more terminal devices 20, 20a may e.g. be a user equipment (UE) or a data transceiver modem, which, for example, may be associated with a mobile object (not shown) such as e.g. a vehicle, for example car or truck or the like.

In some exemplary embodiments, the one or more terminal devices 20, 20a may be at least one of (or may e.g. be associated with at least one of): an loT (Internet of Things) device, an infrastructure component or part of an infrastructure component (e.g., traffic lights, street lights, traffic sign, toll gate), an industrial automation component, e.g. lloT (Industrial loT) component or infrastructure (e.g., robots, machines, etc.), a device for a mobile broadband user, and/or a vehicle.

In some embodiments, Fig. 1, using 104 the second information I-2 for performing the sidelink-based positioning procedure POS-PROC-SL comprises at least one of: a) instructing 104a at least one terminal device 20 to use the second information I-2 for the sidelink-based positioning procedure, for example instructing the at least one terminal device 20 to perform measurements for the sidelink-based positioning procedure based on the at least one parameter PARAM, and/or b) using 104b the second information I-2 for the sidelink-based positioning procedure (e.g., if the method according to the embodiments is performed by a terminal device).

In some embodiments, Fig. 2, aspects of the embodiments may be performed at least temporarily by the network device 10 and/or a location management function LMF associated with the network device 10.

In some embodiments, Fig. 2, an apparatus 100 may be provided to cause at least one of the network device 10 and/or the location management function LMF to perform at least some aspects of the embodiments. In this regard, in some embodiments, Fig. 1, using 104 the second information I-2 for performing the sidelink-based positioning procedure POS-PROC-SL comprises, for example, instructing 104a the at least one terminal device 20 to use the second information I-2 for the sidelink-based positioning procedure, for example instructing the at least one terminal device 20 to perform measurements for the sidelink-based positioning procedure based on the at least one parameter PARAM.

In some embodiments, Fig. 2, aspects of the embodiments may be performed at least temporarily by the at least one terminal device 20 (and/or by other terminal device(s) 20a). In this regard, in some embodiments, Fig. 1, using 104 the second information I-2 for performing the sidelink-based positioning procedure POS-PROC-SL comprises, for example, using 104b, e.g. by the terminal device 20 itself, the second information I-2 for the sidelink-based positioning procedure.

In some embodiments, Fig. 2, an apparatus 200 may be provided to cause the at least one terminal device 20 to perform at least some aspects of the embodiments.

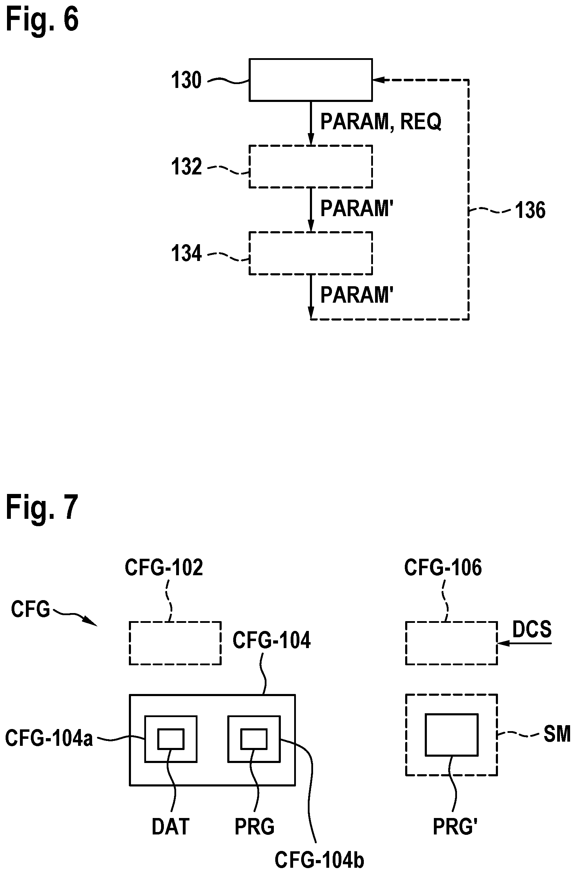

An exemplary configuration for the apparatus 100 and/or the apparatus 200 according to some embodiments is explained in detail further below with reference to Fig. 7.

Returning to Fig. 1, in some embodiments, determining 102 the second information I-2 comprises at least one of: a) performing 102a a search (e.g., a parameter search) for determining a parameter value for the at least one parameter PARAM that enables to meet the at least one requirement REQ (e.g., as characterized by the first information 1-1), b) using 102b a look-up table.

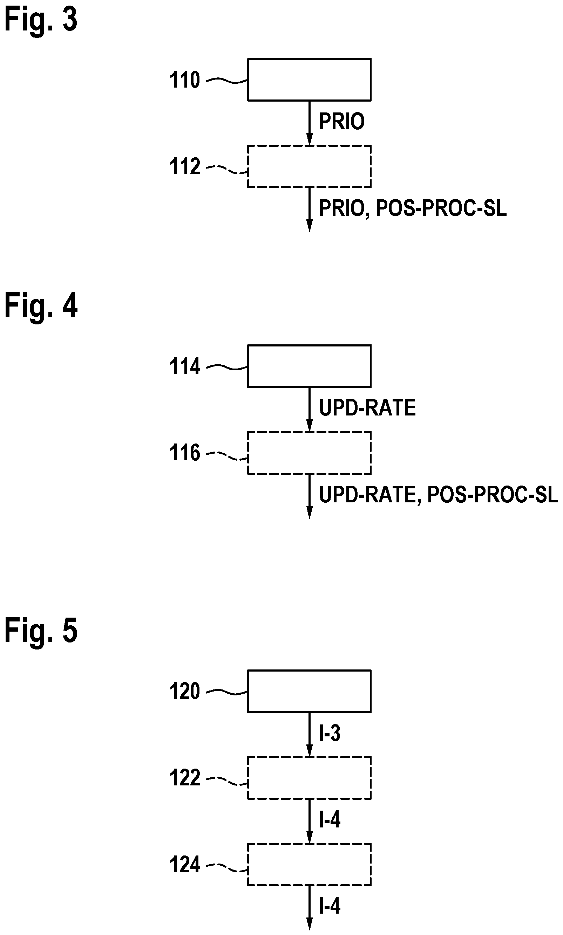

In some embodiments, Fig. 3, the method comprises: determining 110, e.g., assigning, a priority PRIO based on the second information I-2. In some embodiments, the second information I-2 may e.g. characterize at least one latency requirement, e.g., an end-to-end latency requirement, and, in some embodiments, block 110 comprises determining and/or assigning the priority PRIO based on the at least one latency requirement. The optional block 112 of Fig. 3 symbolizes using the assigned priority PRIO for the sidelink-based positioning procedure POS-PROC-SL. In some embodiments, this enables to meet the exemplary end-to-end latency requirement when performing the sidelink-based positioning procedure POS-PROC-SL.

Fig. 4 exemplarily depicts aspects according to some embodiments, wherein block 114 symbolizes determining, e.g., a required update rate UPD-RATE (as, e.g., characterized by the first information I-1) for the sidelink-based positioning procedure POS-PROC-SL. The optional block 116 symbolizes using the required update rate UPD-RATE for the sidelink-based positioning procedure POS-PROC-SL.

In some embodiments, Fig. 5, the method comprises: receiving 120 third information I-3 (e.g., in the form of a measurement report) from at least one terminal device 20 (Fig. 2), the third information I-3 characterizing one or more measurements associated with the sidelink-based positioning procedure POS-PROC-SL, and, optionally, determining 122 fourth information I-4 characterizing a position POS-20 of the at least one terminal device 20, and, optionally, providing 124 (Fig. 5), e.g., transmitting, the fourth information to at least one further entity, e.g., to the network device 10 (and/or to the location management function LMF and/or to the application APP).

In some embodiments, Fig. 6, the method comprises at least one of: a) determining 130 whether the at least one parameter PARAM enables to meet the at least one requirement REQ, and/or b) adapting 132 the at least one parameter PARAM (thus, for example, obtaining at least one adapted parameter PARAM'), and/or c) using 134 the at least one adapted parameter PARAM' for performing the sidelink-based positioning procedure POS-PROC-SL, and/or d) repeating 136, e.g. iteratively repeating, at least one of the determining 130 and/or the adapting 132 and/or the using 134.

In some embodiments, Fig. 2, the at least one requirement REQ comprises at least one of the following elements: a) an end-to-end requirement, for example measured from a request to an obtaining of a result associated with the request, for example an end-to-end latency, b) a requirement associated with a predetermined, for example finer, granularity, for example related to at least one specific step of a process, for example b1) a measurement duration, and/or b2) a latency between an end of a measurement and a provision of the position, c) a positioning requirement, for example an accuracy and/or a precision, d) a positioning report requirement, for example an update rate.

In some embodiments, Fig. 1, receiving 100 the first information I-1 comprises receiving 100a the first information I-1 within a positioning request POS-REQ. In other words, in some embodiments, the first information I-1 may be transmitted together with the positioning request, e.g. by the application APP.

In some embodiments, Fig. 2, the at least one parameter PARAM comprises at least one of: a) a bandwidth BW associated with positioning reference signals, PRS, for the sidelink-based positioning procedure POS-PROC-SL, b) a periodicity PERIOD of positioning reference signals, PRS, for the sidelink-based positioning procedure POS-PROC-SL, c) a comb structure COMB associated with the sidelink-based positioning procedure POS-PROC-SL.

Fig. 7 schematically depicts a simplified block diagram of a configuration CFG according to some embodiments. In some embodiments, the depicted configuration CFG may e.g. be used for implementing at least one of the apparatus 100, 200 (Fig. 2) according to the embodiments.

In some embodiments, the configuration CFG comprises at least one calculating unit, e.g. processor, CFG-102 and at least one memory unit CFG-104 associated with (i.e., usably by) the at least one calculating unit CFG-102, e.g. for at least temporarily storing a computer program PRG and/or data DAT, wherein the computer program PRG is e.g. configured to at least temporarily control an operation of the configuration CFG, e.g. for (e.g., within) at least one apparatus 100, 200, such as e.g. the execution of a method according to some embodiments.

In some embodiments, the at least one calculating unit CFG-102 comprises at least one core (not shown) for executing the computer program PRG or at least parts thereof, e.g. for executing the method according to the embodiments or at least one or more steps and/or other aspects thereof.

In some embodiments, the at least one calculating unit CFG-102 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). In some embodiments, any combination of two or more of these elements is also possible.

In some embodiments, the memory unit CFG-104 comprises at least one of the following elements: a volatile memory CFG-104a, e.g. a random-access memory (RAM), a non-volatile memory CFG-104b, e.g. a Flash-EEPROM.

In some embodiments, the computer program PRG is at least temporarily stored in the non-volatile memory CFG-104b. Data CFG-DAT (e.g. associated with the first information I-1 and/or the second information I-2 and the like), which may e.g. be used for executing the method according to some embodiments, may at least temporarily be stored in the RAM CFG-104a.

In some embodiments, an optional computer-readable storage medium SM comprising instructions, e.g. in the form of a further computer program PRG', may be provided, wherein the further computer program PRG', when executed by a computer, i.e. by the calculating unit CFG-102, may cause the computer CFG-102 to carry out the method according to the embodiments. As an example, the storage medium SM may comprise or represent a digital storage medium such as a semiconductor memory device (e.g., solid state drive, SSD) and/or a magnetic storage medium such as a disk or hard disk drive (HDD) and/or an optical storage medium such as a compact disc (CD) or DVD (digital versatile disc) or the like.

In some embodiments, the configuration CFG may comprise an optional data interface CFG-106, e.g. for bidirectional data exchange with an external device (not shown). As an example, by means of the data interface CFG-106, a data carrier signal DCS may be received, e.g. from the external device, for example via a wired or a wireless data transmission medium, e.g. over a (virtual) private computer network and/or a public computer network such as e.g. the Internet.

In some embodiments, the data carrier signal DCS may represent or carry the computer program PRG, PRG' according to the embodiments, or at least a part thereof.

Some embodiments relate to a computer program PRG, PRG' comprising instructions which, when the program is executed by a computer CFG-102, cause the computer CFG-102 to carry out the method according to the embodiments.

Some embodiments, Fig. 2, relate to an apparatus 100, 200, for example for a mobile communication system, for performing the method according to the embodiments. In some embodiments, at least one apparatus 100, 200 may comprise the configuration CFG of Fig. 7.

Some embodiments, Fig. 2, relate to a network device 10, for example for a mobile communication system 1000, comprising the apparatus 100 according to the embodiments. In some embodiments, the apparatus 100 may be provided within (not shown in Fig. 2) the network device 10. In some embodiments, the apparatus 100 may be provided outside of the network device 10. In some embodiments, the network device 10 may e.g. implement a location management function, LMF.

Some embodiments, Fig. 2, relate to a terminal device 20, 20a, for example for a mobile communication system 1000, comprising the apparatus 200 according to the embodiments. In some embodiments, the apparatus 200 may be provided within (not shown in Fig. 2) the terminal device 20. In some embodiments, the apparatus 200 may be provided outside of the network device 20.

Some embodiments, Fig. 2, relate to a communication system 1000, for example a wireless, for example cellular, communication system, comprising at least one of: a) an apparatus 100, 200 according to the embodiments, and/or b) a network device 10 according to the embodiments, and/or c) a terminal device 20, 20a according to the embodiments.

In the following, further advantageous aspects and exemplary embodiments are disclosed, which, in some embodiments, may - either in combination with each other or as such - be combined with at least one of the abovementioned aspects and/or embodiments.

In some embodiments, the principle according to the embodiments enables to set one or more parameters for the sidelink-based positioning procedure POS-PROC-SL, such as, e.g., a PRS period.

In some embodiments, the functionality to perform at least some aspects of the embodiments may e.g. be provided for and/or within a network device 10, e.g. the location management function LMF, see, for example, the apparatus 100 of Fig. 2.

In some embodiments, the functionality to perform at least some aspects of the embodiments may e.g. be provided for and/or within at least one terminal device 20, 20a, see, for example, the apparatus 200 of Fig. 2.

In other words, while at least some conventional approaches currently do not have any concept of which entity may e.g. set parameters for the sidelink-based positioning procedure POS-PROC-SL and/or how these parameters for the sidelink-based positioning procedure POS-PROC-SL may be set, the principle according to the embodiments enables to address these issues.

In some embodiments, Fig. 2, different applications APP may e.g. have different requirements, e.g., depending on external parameters (e.g., speed). In some embodiments, these different requirements of the different applications APP are proposed to be used, e.g. by transmitting the first information I-1, e.g. to the location management function LMF. In some embodiments, the location management function LMF may translate these requirements into one or more parameters for the sidelink-based positioning procedure POS-PROC-SL, e.g., by determining the second information I-2 based on the first information I-1. In some embodiments, the one or more parameters for the sidelink-based positioning procedure POS-PROC-SL may e.g. comprise a period, e.g. a periodicity with which the PRS, e.g. SL-PRS, are transmitted, e.g. by the one or more terminal devices 20, 20a.

In some embodiments, the principle according to the embodiments enables to translate one or more application's requirements REQ into one or more parameters PARAM, the one or more parameters PARAM e.g. characterizing settings for the PRS, e.g. SL-PRS. In some embodiments, aspects thereof may e.g. be performed by the location management function LMF.

As an example, in some embodiments, Fig. 2, an application APP may determine its requirements REQ for the sidelink-based positioning procedure POS-PROC-SL such as, e.g., an end-to-end ("E2E") latency < 10 ms, a positioning accuracy 1m, and an update rate of 1/s). In some embodiments, the application APP may transmit its requirements REQ, e.g. in the form of the first information I-1, to a device performing at least some aspects of the embodiments, e.g., the location management function LMF. In some embodiments, the location management function LMF may assign a priority related to the latency requirement of the application APP. In some embodiments, the location management function LMF may perform a parameter search to determine one or more parameters which enable to achieve the accuracy and the time resolution requested by the application, e.g., as characterized by the requirements REQ of the application APP. In some embodiments, the location management function LMF may instruct (e.g., by transmitting the second information I-2 to) a terminal device 20, which may e.g. at least temporarily assume the role of an anchor UE, to perform measurements with the parameters as obtained by the parameter search. In some embodiments, then, the sidelink-based positioning procedure POS-PROC-SL is performed based on the parameters as obtained by the parameter search, e.g., according to the requirements REQ of the application APP. In some embodiments, the location management function LMF provides a requested position (e.g., as requested by the application APP), e.g., at the requested update rate (e.g., 1/s, see above). In some embodiments, the location management function LMF may, for example regularly, check that the requirements REQ are met and may optionally adapt one or more parameters for the sidelink-based positioning procedure POS-PROC-SL, e.g. if the requirements REQ are not met any more.

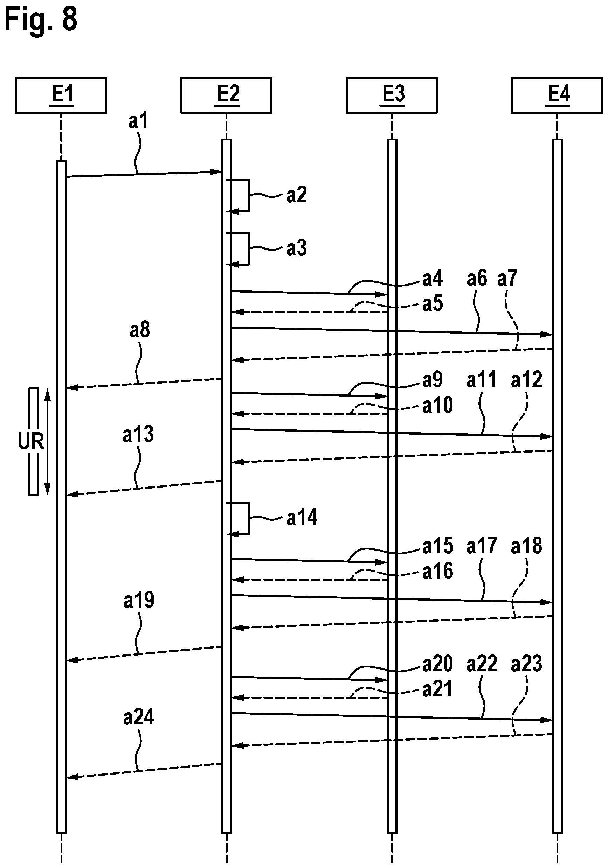

Fig. 8 schematically depicts a simplified signaling diagram according to some embodiments. Element E1 symbolizes an application (e.g., similar to the application APP of Fig. 2), element E2 symbolizes a location management function LMF (see element LMF of Fig. 2), element E3 symbolizes a first anchor UE that may be used for the sidelink-based positioning procedure POS-PROC-SL, and element E4 symbolizes a second anchor UE that may be used for the sidelink-based positioning procedure POS-PROC-SL.

In some embodiments, the application E1 determines its requirements for the sidelink-based positioning procedure POS-PROC-SL, e.g., for SL positioning. In some embodiments, these are exemplary types of requirements: a) End to end requirements: measured from the request to the obtaining of the result, example: E2E latency, b) Finer granularity requirements: requirements related to specific steps of the process. Example: measurement duration, latency between the end of the measurement and the providing of the position etc., c) Positioning requirements, Example: accuracy, precision, d) Positioning report requirements, e.g. an update rate.

In some embodiments, Fig. 8, the application E1 transmits the requirements, e.g. alongside (e.g., together with) a positioning request, see arrow a1. In some embodiments, this positioning request may be operated through a gateway mobile location service (GMLS), e.g. according to and/or based on some accepted standard, such as, e.g., 3GPP TS 29.515 version 16.4.0 Release 16. In some embodiments, the structure of the positioning request may be extended, e.g., to include the application requirements in terms of positioning. In some embodiments, the application requirements may characterize a quality of service, QoS, class.

In some embodiments, the LMF E2 analyzes the received requirements, e.g., a required latency, see arrow a2, and, optionally, assigns a priority to the PRS in order to fulfil this requirement for the application E1.

In some embodiments, the LMF E2 performs a parameter search, see arrow a3. In some embodiments, the parameter search a3 may comprise adjusting one or more PRS parameters by the LMF E2, e.g., in order to meet the requirements provided, e.g., set by the application E1 (see arrow a1). In some embodiments, these parameters are for instance at least one of: a) the PRS bandwidth, b) the PRS periodicity, c) the comb structure.

In some embodiments, the parameter search a3 may comprise an iterative parameter swipe, e.g. by iteratively adjusting one or more PRS parameters. In some embodiments, the adjusting can be iteratively performed, e.g. with one or more of the following steps.

In some embodiments, the LMF E2 can e.g. set a PRS frequency that is higher than a required update rate (e.g., as indicated by the application E1), e.g., in order to improve a precision (e.g., to reduce a variance) of the measurement.

In some embodiments, the LMF E2 instructs one or more anchor UEs E3, E4 with positioning measurements, see arrows a4, a6, a9, a11, a15, a17, a20, a22. The corresponding measurement reports are symbolized with arrows a5, a7, a10, a12, a16, a18, a21, a23 of Fig. 8.

In some embodiments, instructing the one or more anchor UEs E3, E4 with the positioning measurements may include performing positioning measurements with the received signals already using the found parameters (e.g., as obtained according to arrow a3) or being instructed to send positioning signals with the found parameters.

In some embodiments, the LMF E2 provides positioning result(s) to the requesting application E1, see, for example, the arrows a8, a13, a19, a24.

In some embodiments, Fig. 8, the LMF E2 provides positioning reports at an update rate UR as set by the application (e.g., as characterized by the application's requirements).

In some embodiments, Fig. 8, the LMF E2 may, for example repeatedly, for example periodically, check the requirements of the application E1. In some embodiments, e.g., when performing measurements and/or when combining the measurements, the LMF E2 may evaluate a performance of the sidelink-based positioning process, e.g. with respect to the requirements provided by the application E1, and the LMF E2 may e.g. analyze whether it (e.g., the current sidelink-based positioning process) meets these requirements. In some embodiments, such evaluation may e.g. be used in combination with an iterative parameter search, e.g., as mentioned in relation with the previous step. In this respect, arrow a14 of Fig. 8 symbolizes an adaptation of one or more parameters for the sidelink-based positioning process.

In some embodiments, Fig. 8, the application E1 may adapt its update rate (or its requirement with respect to the update rate, respectively) to a relative speed of a target UE a position of which is to be determined using the sidelink-based position procedure.

In some embodiments, Fig. 8, the role of the LMF E2 may be - at least temporarily - taken over by a terminal device, e.g., UE, e.g. for cases of partial coverage, or out-of-coverage scenarios, e.g., by a server UE. In other words, in some embodiments, aspects of arrows a2, a3, a4, ... can e.g. be performed by a UE, e.g. indicating in a look up table one or more performance indicators and/or associated QoS indicators.

In some embodiments, the look up table may characterize, e.g. comprise, a mapping between parameters, e.g., a set of parameters, and QoS requirements, for instance maximum values of QoS indicator(s). In some embodiments, e.g., an example can be a list of bandwidth values mapped with E2E latencies. In some embodiments, e.g., as another example, the look up table may characterize, e.g. comprise, a list of PRS period(s) mapped with a positioning accuracy. In some embodiments, the look up table can e.g. be obtained by storing results of previous (e.g., preceding) parameter sweeps, and/or results coming from previous studies.

In some embodiments, e.g. if it is determined that the requirements of the application cannot be met (e.g., when the LMF E2 determines that a QoS class characterizing the application's requirements may not be achieved), e.g. because of limited resources, one or more of the following aspects may be considered and/or performed: a) delay the sidelink-based positioning procedure, e.g., until it reaches a maximum E2E latency, b) perform the sidelink-based positioning procedure according to a best effort scheme (or in accordance with a different QoS class, e.g. characterized by relaxed requirements), c) abort the sidelink-based positioning procedure.

In some embodiments, positioning signals, e.g. signals used for sidelink-based positioning, such as e.g. SL-PRS, can be periodic or semi-persistent or aperiodic.

In some embodiments, a period of the PRS, e.g. SL-PRS, is defined as a repetition period of a positioning procedure. In some embodiments, one sidelink-based positioning procedure may be comprised of multiple PRS slots, for instance in order to average the measurements and increase the precision (e.g. reduce standard deviation).

In some embodiments, e.g., in the case of semi-persistent PRS frequency, an entity is responsible for setting the frequency for a defined period. In some embodiments, this may e.g. be performed by the apparatus 100 and/or the network device 10 and/or the location management function LMF, E2.

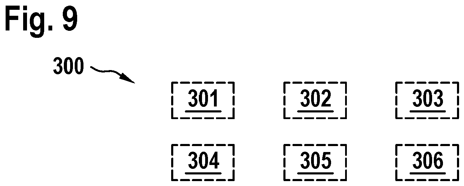

Some embodiments, Fig. 9, relate to a use 300 of the method according to the embodiments and/or of the apparatus 100, 200 according to the embodiments and/or of the network device 10 according to the embodiments and/or of the terminal device 20, 20a according to the embodiments and/or of the communication system 1000 according to the embodiments and/or of the computer program PRG, PRG' according to the embodiments, and/or of the computer-readable storage medium SM according to the embodiments and/or of the data carrier signal DCS according to the embodiments, for at least one of: a) determining 301 the at least one parameter for the sidelink-based positioning procedure, b) setting 302 the at least one parameter for the sidelink-based positioning procedure, c) taking 303 into consideration requirements, for example of at least one application, for the sidelink-based positioning procedure, d) translating 304 requirements of at least one application related to the sidelink-based positioning procedure to the at least one parameter for the sidelink-based positioning procedure, e) combining 305, for example combined transmission, of a positioning request with the first information, f) providing 306 different parameters for the sidelink-based positioning procedure per application.

## Claims

1. A method, for example a computer-implemented method, for processing data associated with a sidelink-based positioning procedure (POS-PROC-SL), the method comprising: receiving (100) first information (I-1) characterizing at least one requirement (REQ) associated with the sidelink-based positioning procedure (POS-PROC-SL), determining (102), based on the first information (I-1), second information (I-2) characterizing at least one parameter (PARAM) for the sidelink-based positioning procedure (POS-PROC-SL), and, optionally, using (104) the second information (I-2) for performing the sidelink-based positioning procedure (POS-PROC-SL).

2. The method according to claim 1, wherein using (104) the second information (I-2) for performing the sidelink-based positioning procedure (POS-PROC-SL) comprises at least one of:
a) instructing (104a) at least one terminal device (20, 20a) to use the second information (I-2) for the sidelink-based positioning procedure (POS-PROC-SL), for example instructing the at least one terminal device (20, 20a) to perform measurements for the sidelink-based positioning procedure (POS-PROC-SL) based on the at least one parameter (PARAM),
b) using (104b) the second information (I-2) for the sidelink-based positioning procedure (POS-PROC-SL).

3. The method according to any of the preceding claims, wherein determining (102) the second information (I-2) comprises at least one of:
a) performing (102a) a search for determining a parameter value for the at least one parameter (PARAM) that enables to meet the at least one requirement (REQ),
b) using (102b) a look-up table.

4. The method according to any of the preceding claims, comprising: determining (110), e.g., assigning, a priority (PRIO) based on the second information (I-2), e.g. based on a latency requirement, e.g. an end-to-end latency requirement, and, optionally, using (112) the priority for the sidelink-based positioning procedure (POS-PROC-SL).

5. The method according to any of the preceding claims, comprising: receiving (120) third information (I-3) from at least one terminal device (20, 20a), the third information (I-3) characterizing one or more measurements associated with the sidelink-based positioning procedure (POS-PROC-SL), and, optionally, determining (122) fourth information (I-4) characterizing a position of the at least one terminal device (20, 20a), and, optionally, providing (124), e.g., transmitting, the fourth information (I-4) to at least one further entity.

6. The method according to any of the preceding claims, comprising at least one of:
a) determining (130) whether the at least one parameter (PARAM) enables to meet the at least one requirement (REQ), and/or
b) adapting (132) the at least one parameter (PARAM), and/or
c) using (134) the adapted at least one parameter (PARAM) for performing the sidelink-based positioning procedure (POS-PROC-SL), and/or
d) repeating (136), e.g. iteratively repeating, at least one of the determining (130) and/or the adapting (132) and/or the using (134).

7. The method according to any of the preceding claims, wherein the at least one requirement (REQ) comprises at least one of the following elements:
a) an end-to-end requirement, for example measured from a request to an obtaining of a result associated with the request, for example an end-to-end latency,
b) a requirement associated with a predetermined, for example finer, granularity, for example related to at least one specific step of a process, for example b1) a measurement duration, and/or b2) a latency between an end of a measurement and a provision of the position,
c) a positioning requirement, for example an accuracy and/or a precision, d) a positioning report requirement, for example an update rate.

8. The method according to any of the preceding claims, wherein receiving (100) the first information (I-1) comprises receiving (100a) the first information (I-1) within a positioning request (POS-REQ).

9. The method according to any of the preceding claims, wherein the at least one parameter (PARAM) comprises at least one of:
a) a bandwidth (BW) associated with positioning reference signals for the sidelink-based positioning procedure (POS-PROC-SL),
b) a periodicity (PERIOD) of positioning reference signals for the sidelink-based positioning procedure (POS-PROC-SL),
c) a comb structure (COMB) associated with the sidelink-based positioning procedure (POS-PROC-SL).

10. An apparatus (100; 200), for example for a mobile communication system (1000), for performing the method according to at least one of the preceding claims.

11. A network device (10), for example for a mobile communication system (1000), comprising the apparatus (100) according to claim 10.

12. A terminal device (20, 20a), for example for a mobile communication system (1000), comprising the apparatus (100) according to claim 10.

13. A communication system (1000) comprising at least one of: a) an apparatus (100; 200) according to claim 10, and/or b) a network device (10) according to claim 11, and/or c) a terminal device (20, 20a) according to claim 12.

14. A computer program (PRG; PRG') comprising instructions which, when the program (PRG; PRG') is executed by a computer (CFG-102), cause the computer (CFG-102) to carry out the method according to at least one of the claims 1 to 9.

15. A use (300) of the method according to at least one of the claims 1 to 9 and/or of the apparatus (100; 100a) according to claim 10 and/or of the network device (10) according to claim 11 and/or of the terminal device (20, 20a) according to claim 12 and/or of the communication system (1000) according to claim 13 and/or of the computer program (PRG; PRG') according to claim 14, for at least one of:
a) determining (301) the at least one parameter (PARAM) for the sidelink-based positioning procedure (POS-PROC-SL),
b) setting (302) the at least one parameter (PARAM) for the sidelink-based positioning procedure (POS-PROC-SL),
c) taking (303) into consideration requirements, for example of at least one application (APP), for the sidelink-based positioning procedure (POS-PROC-SL),
d) translating (304) requirements of at least one application (APP) related to the sidelink-based positioning procedure (POS-PROC-SL) to the at least one parameter (PARAM) for the sidelink-based positioning procedure (POS-PROC-SL),
e) combining (305), for example combined transmission, of a positioning request with the first information (I-1),
f) providing (306) different parameter(s) for the sidelink-based positioning procedure (POS-PROC-SL) per application (APP).
